Europäisches Patentamt

European Patent Office

Office européen des brevets

(11) Numéro de publication: **0 423 049 A1**

# DEMANDE DE BREVET EUROPEEN

(21) Numéro de dépôt: **90460035.0**

(22) Date de dépôt: **10.10.90**

(51) Int. Cl.5: **D06N 3/04, B32B 27/12**

(30) Priorité: **13.10.89 FR 8913650**

(43) Date de publication de la demande:
**17.04.91 Bulletin 91/16**

(84) Etats contractants désignés:
**AT BE CH DE ES GB IT LI NL SE**

(71) Demandeur: **Mexia, Bernard**
**Moulin de Villefollette**
**F-37230 Luynes(FR)**

(72) Inventeur: **Mexia, Bernard**
**Moulin de Villefollette**
**F-37230 Luynes(FR)**

(74) Mandataire: **Le Guen, Louis François**
**CABINET Louis LE GUEN 38, rue Levavasseur**
**B.P. 91**
**F-35802 Dinard Cédex(FR)**

(54) **Tissu non tissé imperméable et résistant au feu.**

(57) Il se compose de deux couches, soit de l'intérieur vers l'extérieur:
- une première couche de tissu non tissé en polyéthylène de haute densité ou en polypropylène, tels que les tissus commercialisés sous les noms de TYVEK et de TYPAR respectivement, imprégnés d'une solution de sels contenant des halogènes ou non, et
- une seconde couche de polyéthyiène de classe M1 extrudé et laminé sur la première.

EP 0 423 049 A1

La présente invention concerne un tissu non tissé imperméable et présentant une haute résistance au feu, le tissu étant plus particulièrement prévu pour la fabrication de vêtements de travail et d'aménagements internes d'automobiles, d'avions, etc. Le tissu suivant l'invention est notamment utilisable pour la fabrication de vêtements permettant de travailler dans des installations nucléaires où des zones sont contaminées par des poussières, étant entendu que le tissu ne constitue toutefois pas une barrière contre les radiations.

Dans le brevet américain US 4 272 851, il est décrit des vêtements dont le tissu est un non tissé en polyéthylène produit par filage, liage de millions de petites fibres de polyéthylène à chaud et sous pression, tel que le tissu non tissé commercialisé sous le nom de "Tyvek" par la Société Du Pont de Nemours. Le tissu obtenu est léger mais robuste, possédant une résistance exceptionnelle à la rupture et à la déchirure et conservant ses propriétés qu'il soit sec ou humide. Il forme une barrière capable de retenir des particules microscopiques de l'ordre d'un demi-micromètre. Ce tissu est utilisable pour fabriquer tous les vêtements, des combinaisons, des tabliers, des blouses, des cagoules, des surbottes, des coiffes, etc., ainsi que des emballages, des gaines, des housses de protection. etc. Il est particulièrement utile dans l'industrie nucléaire et est jetable après usage. Toutefois ce tissu n'est pas classé M1, c'est-à-dire résistant bien au feu, ce qui limite son utilisation.

Il existe également un tissu non tissé thermosoudé en polypropylène sous la forme d'une nappe dotée d'une haute résistance, tel que le "TYPAR" commercialisé par la Société Du Pont de Nemours, dans lequel les filaments de polypropylène sont liés entre eux sans l'aide d'agents étrangers. Ce tissu peut notamment être utilisé pour des supports de tapis, des meubles rembourrés, de la literie, des revêtemenu de sièges pour tous véhicules, des sacs pour produits chimiques et déchets, des bâches de protection, des emballages, etc. Comme le non tissé précédemment mentionné, il n'est pas classé M1.

Or, il y a une demande de plus en plus pressante pour des tissus non tissés de classe M1, comme l'exigent certaines normes européennes ou internationales, particulièrement dans les domaines d'utilisation mentionnés ci-dessus.

Un objet de la présente invention consiste à prévoir un tissu qui réponde à ces exigences de résistance au feu, avec au moins les mêmes champs d'application que les tissus mentionnés ci-dessus.

Suivant une caractéristique de l'invention, il est prévu un tissu du type mentionné dans le préambule, se composant de deux couches, soit de l'intérieur vers l'extérieur:
- une première couche de tissu non-tissé en polyéthylène de haute densité ou en polypropylène, tels que les tissus commercialisés sous les noms de TYVEK et de TYPAR respectivement, imprégnés d'une solution de sels contenant des halogènes ou non, et
- une seconde couche de polyéthylène de classe M1 extrudé et laminé sur la première.

Suivant une autre caractéristique, il est prévu un tissu comprenant les deux couches mentionnées ci-dessus, et dans lequel, avant l'application de la couche de polyéthylène extrudé laminé, la face de la première couche tournée vers la seconde, a reçu, par impression, une couche intermédiaire de couleur de classe M1.

La préparation du tissu suivant l'invention peut être réalisée de la manière suivante. On prend du non-tissé TYVEK que l'on passe dans un foulard contenant une solution de sels contenant des halogènes et, éventuellement, du phosphore. Ensuite, une fois la couche de non-tissé imprégnée sèche, on lui applique une impression de couleur de classe M1. Enfin, on applique par extrusion sur la face coloriée, un film de polyéthylène extrudé laminé de classe M1.

Des essais au feu du tissu ainsi fabriqué ont été fait selon les normes françaises NF P 92503 - Essai au brûleur électrique applicable aux matériaux souples inférieurs ou égaux à 5 mm -et NF P 92504 - Essai de propagation de la flamme applicable aux matériaux souples non destinés à être collés sur un subjectile (essai complémentaire) -.

L'essai au brûleur électrique a été réalisé conformément à l'arrêté du 30 juin 1983. La flamme pilote a été appliquée après 20 s, 45 s, 75 s, 105 s, 135 s, 165 s, etc. Le résultat des essais est consigné dans le tableau 1 suivant.

Tableau

| Eprouvettes | Instant de l'inflammation | Durée de l'inflammation après retrait de la flamme | Longueur détruite | Largeur détruite |
|---|---|---|---|---|
| | s | s | cm | cm |
| 1 | 0 | 0 | 24 | 0 |
| 2 | 0 | 0 | 22 | 0 |
| 3 | 0 | 0 | 24 | 0 |
| 4 | 0 | 0 | 22 | 0 |

On constate que la moyenne des longueurs détruites est de 23 cm. Il n'y a pas de chutes de gouttes non enflammées ou enflammées; la présence de fumées est d'importance faible; il n'y a pas de points en ignition.

L'essai de propagation de la flamme a été réalisé conformement aux dispositions de l'arrêté du 30 juin 1983. Les résultats des essais sont consignés dans le Tableau 2.

Tableau 2

| Eprouvettes | Durée de propagation de flammes en s après retrait de la source de chaleur | | | | | | |
|---|---|---|---|---|---|---|---|
| | 1er | 2ème | 3ème | 4ème | 5ème | 6ème | 7ème .... |
| 1 | 0 | 0 | 0 | 0 | 0 | 0 | |
| 2 | 0 | 0 | 0 | 0 | 0 | | |
| 3 | 0 | 0 | 0 | 0 | 0 | | |
| 4 | 0 | 0 | 0 | 0 | 0 | | |

Les résultats de ces essais sont conformes, suivant la norme NF P 92 507, au classement de la catégorie M1.

**Revendications**

1) Tissu non tissé imperméable et présentant une haute résistance au feu, caractérisé en ce qu'il se compose de deux couches, soit de l'intérieur vers l'extérieur;
- une première couche de tissu non tissé en polyéthylène de haute densité ou en polypropylène, tels que les tissus commercialisés sous les noms de TYVEK et de TYPAR respectivement, imprégnés d'une solution de sels contenant des halogènes ou non, et
- une seconde couche de polyéthyiène de classe M1 extrudé et laminé sur la première.
2) Tissu suivant la revendication 1, caractérisé en ce qu'avant l'application de la seconde couche, la face de la première couche tournée vers la seconde, a reçu, par impression, une couche intermédiaire de couleur de classe M1.

Office européen
des brevets

**RAPPORT DE RECHERCHE
EUROPEENNE**

Numéro de la demande

**EP 90 46 0035**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 825 464   (R. CROWLY)<br>* colonne 2, lignes 5 - 20; revendications 1, 12, 15 *<br>– – – | 1 | D<br>06 N 3/04<br>B 32 B 27/12 |
| D,Y | US-A-4 272 851   (L. GOLDSTEIN)<br>* colonne 1, lignes 29 - 35 *<br>– – – | 1 | |
| Y | FR-A-2 000 333   (SHOWA DENKO KABUSHIKI KAISHA)<br>* page 4; revendications 1, 2 *<br>– – – | 1 | |
| Y | FR-A-1 014 986   (E. I. DU PONT DE NEMOURS)<br>* page 3, colonne 2, lignes 47 - 58; revendications A, 1-7, B *<br>– – – | 1 | |
| A | GB-A-2 053 089   (D B PLASTICS)<br>* revendications 1-8 *<br>– – – – – | 1,2 | |

|  | DOMAINES TECHNIQUES RECHERCHES (Int. Cl.5) |
|---|---|
|  | D 06 N<br>B 32 B |

Le présent rapport de recherche a été établi pour toutes les revendications

| Lieu de la recherche | Date d'achèvement de la recherche | Examinateur |
|---|---|---|
| La Haye | 18 janvier 91 | PFANNENSTEIN H.F. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
............................................................
& : membre de la même famille, document
    correspondant